# EUROPÄISCHE PATENTSCHRIFT

(11) **EP 2 220 395 B1**
(45) Veröffentlichungstag und Bekanntmachung des Hinweises auf die Patenterteilung: **02.11.2011**
(21) Anmeldenummer: 08865839.8
(22) Anmeldetag: 18.12.2008
(51) Int. Cl.: F16F 15/14

(54) **VERBESSERTER SCHWINGUNGSTILGER FÜR ROTIERENDE WELLEN**
IMPROVED TUNED MASS DAMPER FOR ROTATING SHAFTS
AMORTISSEURS DE VIBRATIONS AMELIORES POUR ARBRES ROTATIFS

(30) Priorität: 20.12.2007 DE 102007062423; 30.01.2008 DE 102008006782
(43) Veröffentlichungstag der Anmeldung: 25.08.2010
(73) Patentinhaber: Neapco Europe GmbH, 52351 Düren (DE)
(72) Erfinder: HÖKS, Luis, 52249 Eschweiler (DE); SCHWAB, Marco, 50823 Köln (DE); FELCHNER, Christian, 42369 Wuppertal (DE)
(74) Vertreter: Bauer Vorberg Kayser Patentanwälte
(86) Internationale Anmeldenummer: PCT/EP2008/067943
(87) Internationale Veröffentlichungsnummer: WO 2009/080718

(56) Entgegenhaltungen:
- EP-A- 0 381 566
- DE-A1- 4 335 766

## Beschreibung

Die Erfindung betrifft einen auf den Außenumfang einer rotierenden Welle oder Achse aufsetzbaren Schwingungstilger. Schwingungstilger bzw. Schwingungsdämpfer werden zur Reduzierung von nieder- und hochfrequenten Schwingungen allgemein in Maschinen, Anlagen und Bauwerken eingesetzt. Die Funktion eines Tilgers beruht auf einem Feder-Masse-System, das der Störschwingung entgegenwirkt und diese dadurch beruhigt. Werden dabei dämpfende Elemente verwendet, spricht man häufig auch von Schwingungsdämpfern. Die Masse des Tilgers richtet sich nach der Masse des zu beruhigenden Systems. So finden solche Schwingungstilger an rotierenden Wellen oder Achsen auch immer dann Verwendung, wenn Schwingungen, beispielsweise weil Unwuchten nicht gänzlich vermieden und/oder auch Eigenresonanzen angeregt werden können, unterdrückt werden sollen, um die Konstruktion wenig zu belasten und/oder um die akustische Beeinträchtigung zu minimieren. So finden die Schwingungstilger auch bei Antriebswellen von Kraftfahrzeugen Verwendung und sorgen neben den oben genannten Wirkungen für eine das Fahr- bzw. Lenkverhalten positiv beeinflussende Unterdrückung und/oder Absorption von störenden Schwingungen, d.h. nicht nur auf Unwuchten beruhenden Schwingungen, im Antriebsstrang.

Ein für eine Antriebswelle in einem Kraftfahrzeug vorgesehener Schwingungstilger ist beispielsweise aus der DE 196 38 290 A1 bekannt. Da dieser nicht segmentiert ist, ist die nachträglicher Montage des Schwingungstilgers aufwendig, da dazu die Welle wenigstens an einem ihren Ende gelöst werden muss, um den Schwingungstilger darüber zu stülpen. Es hat sich in der Praxis gezeigt, dass es aufgrund von Toleranzen bei der Herstellung des Fahrzeugs bzw. seiner Antriebskomponenten oftmals erforderlich ist, Schwingungstilger nachzurüsten, her besteht grundsätzlich Bedarf, diese Nachrüstung zu vereinfachen, indem die Welle oder Achse nicht demontiert werden muss.

Ein derart nachrüstbarer Schwingungstilger ist aus der DE 43 35 766 A1 bekannt. Er weist ein Innenteil auf, das zwei Halbschalen, die am Außenumfang der rotierenden Welle anliegen und ein verformbares Federelement umfasst. Das Federelement umgreifend ist ein als Trägheitsmasse dienendes Außenteil angeordnet. Dieses besteht aus zwei Segmenten, die an ihrem einem Ende jeweils gelenkartig verbunden sind und an ihrem anderen Ende mittels eines separaten Verschlusselements verklammert sind. Nachteilig bei dieser Konstruktion ist einerseits die Tatsache, dass das Verschlusselement als separates Bauelement ausgebildet ist. Zur Befestigung des Verschlusselements bedarf es Aussparungen im Außenteil, die Unwuchten hervorrufen und wenigstens bei hohen Umdrehungsgeschwindigkeiten aufwendig kompensiert werden müssen. Zudem kann es aufgrund der hohen Fliehkräfte und insbesondere bei Ermüdungserscheinungen der Klammer leicht zu einem Lösen der Klammer kommen, was u.a. darauf beruht, dass die Klammer in Radialrichtung abspringen kann. Darüber hinaus bedarf es aufgrund des separaten Verschlusselements eines zusätzlichen Teils, was die Lagerhaltungs- und Transportkosten nachteilig beeinflusst. Zudem ist aufgrund der Mehrteiligkeit die Montage erschwert, da zuerst das Außenteil zusammengedrückt werden muss, um dann im nächsten Schritt die Klammer bei zusammengedrücktem Außenteil anzusetzen. Dies erfordert viel Geschick des Monteurs. Andererseits weist die gelenkartige Verbindung den Nachteil auf, dass auch diese wegen der Bereitstellung der Verschwenkbarkeit nachteilig für Aussparungen im idealerweise rotationssymmetrischen Außenteil sorgt, diese müssen, um Unwuchten zu vermeiden, aufwendig kompensiert werden. Zudem bedarf es bei der Montage eines gewissen Platzes, um das aufgeklappte Außenteil senkrecht zur Rotationsachse auf die Welle oder Achse aufsetzen zu können. Dieser Platz fehlt regelmäßig bei Antriebswellen eines Kraftfahrzeugs.

Aus der DE 690 00 203 T2 ist ein Drehstablager bekannt, bei dem ein relativ starre Armatur aus zwei sich gegenüberliegenden Halbschalen jeweils Rippen aus elastischem Material auf der Innenseite der Halbschalen aufweist. Die Halbschalen sind an ihren beiden Enden in Umfangsrichtung mit einstückig damit ausgebildeten Verbindungselementen zur Herstellung einer wechselseitigen Rastverbindung ausgebildet.

Vor dem Hintergrund der obigen Nachteile des Standes der Technik, ist es daher Aufgabe der vorliegenden Erfindung, einen verbesserten Schwingungstilger zur klemmenden Anbringung auf dem Außenumfang einer rotierenden Welle oder Achse bereitzustellen, der eine preisgünstige, sichere und einfache Befestigung ermöglicht. Diese Aufgabe wird durch ein Schwingungstilger gemäß Anspruch 1 gelöst. Ein gleichermaßen vorteilhaftes Montageverfahren ist Gegenstand des Anspruchs 13. Vorteilhafte Ausgestaltungen sind jeweils Gegenstand der abhängigen Ansprüche.

Die Erfindung betrifft einen Schwingungstilger zur klemmenden Anbringung auf dem Außenumfang einer rotierenden Welle oder Achse, beispielsweise eine Antriebswelle eines Antriebsstrangs eines Kraftfahrzeugs. Der Schwingungstilger umfasst ein Innenteil aus im Wesentlichen nachgiebigem, beilspielsweise elastisch verformbaren, Material. Das Innenteil liegt bei der Anbringung an der Welle oder Achse mit wenigstens einer seiner Flächen an deren Außenumfang an. Der Schwingungstilger umfasst ferner ein wenigstens zwei Segmente aufweisendes Außenteil, das bei der Anbringung an die Welle oder Achse das Innenteil umgreift. Das Außenteil ist aufgrund der Nachgiebigkeit des Innenteils gegenüber der Welle oder Achse schwingend gelagert und dient aufgrund beispielsweise seines im Vergleich zum Innenteil hohen Gewichts als Trägheitsmasse des eingangs erwähnten "Feder-Masse-Systems". Das Außenteil kann aus demselben Material wie das Innenteil hergestellt sein. Bevorzugt wird das spezifische Gewicht des Materials des Außenteils vergleichsweise hoch, beispielsweise gegenüber dem des Innenteils, gewählt sein, um trotz einer großen Masse eine kompakte Bauweise des Schwingungstilgers zu erreichen. Das Prinzip der Schwingungsminderung in der Welle oder Achse aufgrund des durch den Schwingungstilger bereitgestellten "Feder-Masse-Systems" ist nicht Gegenstand der Erfindung und dem Fachmann bekannt. So bedarf es nur einiger weniger Versuche, um durch Einstellen der Nachgiebigkeit bzw. Elastizität des Innenteils, gegebenenfalls dessen Dämpfung und durch Festlegen der im Wesentlichen durch das Außenteil bereitgestellten Trägheitsmasse sowie durch geeignete Wahl der Position des Schweingungstilgers entlang der Längsrichtung der Welle oder Achse die gewünschte Schwingungsminderung in der Achse oder Welle, beispielsweise durch die damit bewirkte Eigenfrequenzverschiebung und/oder Dämpfung, zu erreichen.

Die Erfindung ist hinsichtlich der Verbindung zwischen Innenteil und Außenteil nicht beschränkt. Beispielsweise kann das Innenteil lediglich zwischen Außenteil und Außenumfang der Welle oder Achse eingeklemmt werden, es kann eine haftende Verbindung zwischen Außenteil und Innenteil vorgesehen sein, das Außenteil kann in das Innenteil wenigstens teilweise integriert, beispielsweise eingespritzt oder umgossen, sein.

Der erfindungsgemäße Schwingungstilger zeichnet sich dadurch aus, dass die Segmente an ihren beiden Enden in Umfangsrichtung mit einstückig damit ausgebildeten Verbindungselementen zur Herstellung einer wechselseitigen Rastverbindung ausgebildet sind. Dadurch wird erreicht, dass die Anzahl der Komponenten auf ein Mindestmaß reduziert ist, aber dennoch wenigstens das Außenteil leicht in Radialrichtung, d.h. quer zur Rotationsachse, montiert werden kann, ohne dass die Welle bzw. Achse demontiert werden muss, um das Außenteil über das Wellen- bzw. Achsende zu stülpen. Dadurch können Lagerhaltungs-, Herstellungs- und Transportkosten verringert werden. Durch die beiderseitige Rastverbindung eines Segments kann das Außenteil leicht und insbesondere unter geringem Platzbedarf montiert werden, wobei das Zusammendrücken gleichzeitig die Verrastung bewirkt, was die Montage erheblich vereinfacht. Dies erleichtert die Montage bei engen und/oder schwer zugänglichen Montagestellen. Durch die einstückig mit dem jeweiligen Segment ausgebildeten Rastverbindungen gelingt leicht ein weitgehend von Unwuchten freier Zusammenbau des zusammengesetzten Außenteils. Da dieses in der Regel vergleichsweise schwer ist, macht sich jegliche Inhomogenität leicht als Unwucht bemerkbar und müsste insbesondere bei hohen Umdrehungsgeschwindigkeiten kompensiert werden. Dies wird durch die einstückig mit dem Segment ausgebildeten Verbindungselemente weitgehend vermieden.

Bevorzugt bilden die Segmente im verbundenen Zustand einen im Wesentlichen ringförmigen Rotationskörper aus, d.h. das Außenteil ist im auf die Welle oder Achse aufgesetzten Zustand rotationssymmetrisch bezüglich der Drehachse der Welle oder Achse. Dadurch werden besonders gut Unwuchten durch das vergleichsweise schwere Außenteil vermieden. Bevorzugt ist das Außenteil im Wesentlichen als segmentierter Ring ausgebildet.

Das Innenteil besteht aus Kostengründen und aus Gründen der Haltbarkeit bevorzugt im Wesentlichen aus Gummi oder Kautschuk. Bevorzugt wird synthetischer Hochtemperaturkautschuk verwendet. Als Ersatz zu Gummi oder Kautschuk können auch ein thermoplastisches Elastomer, wie vernetztes Polyurethan, Verwendung finden. Zur Erleichterung der Montage ist das Innenteil bevorzugt als geschlitzter Ring ausgebildet.

Als Material für das Außenteil mit vergleichsweise hohem spezifischen Gewicht aber auch um eine ausreichende Festigkeit bei den hohen Fliehkräften bereitzustellen, kommt eine Eisenlegierung, wie Stahl, bevorzugt zur Anwendung.

Erfindungsgemäß umfassen die jeweiligen Verbindungselemente wenigstens zwei komplementär ausgebildete, sich in Umfangsrichtung des Außenumfangs erstreckende Fortsätze mit sich wechselseitig hintergreifbaren, in Radialrichtung erstreckenden Rastnasen. Es hat sich gezeigt, dass durch diese Anordnung der Fortsätze in Umfangsrichtung und deren Verrastung in Radialrichtung durch Hintergreifen auch bei hohen Fliehkräften eine besonders sichere Verbindung erreicht werden kann, was im Wesentlichen darauf zurückzuführen ist, das die Trennung der Verbindungselemente nur durch eine Auseinanderziehen in tangentialer Richtung erfolgen kann, die Fliehkraft dazu jedoch senkrecht wirkt und somit sogar die Rastwirkung unterstützt. Erfindungsgemäß ist das Innenteil an dessen Stionseiten mit je einer Auskragung zur Fixierung der Segmente in Längsrichtung der Welle oder Achse versehen. In einer weiteren vorteilhaften Ausgestaltung sind das Außenteil und Innenteil derart ausgebildet, dass bei der Anbringung auf den Außenumfang der rotierenden Welle oder Achse das nachgiebige Innenteil komprimiert wird, beispielsweise weil die Außenabmessung bzw. der Außendurchmesser des Innenteils größer als die Innenabmessung bzw. der Innendurchmesser des Außenteils ausfällt. Dadurch werden eine besonders sichere und verschiebungsfeste klemmende Anbringung auf dem Außenumfang der rotierenden Welle oder Achse und eine effiziente Schwingungsankopplung erreicht.

Das Außenteil umfasst in einer weiteren vorteilhaften Ausgestaltung identisch ausgebildete Segmente. Dadurch kann die Anzahl unterschiedlicher Komponenten weiter und vorteilhaft im Hinblick auf Lagerhaltungs-, Transport- und Herstellungskosten verringert werden. Ferner wird dadurch die Montage vereinfacht.

Die Erfindung betrifft ferner einen Montagesatz für wenigstens einen Schwingungstilger in einer der zuvor beschriebenen Ausführungsformen und zur Anbringung an eine rotierende Welle oder Achse. Dieser Satz zeichnet sich durch mehrere Innenteile und/oder Außenteile aus, die sich wenigstens hinsichtlich des Außendurchmessers und/oder des Innendurchmessers unterscheiden. Mittels des Montagesatz gelingt die Anpassung des Schwingungsdämpfers an unterschiedliche bemessene Wellen und/oder die Einstellung unterschiedlicher schwingungsmindernder Wirkungen des Schwingungsdämpfers. Die mehreren Außenteile können sich ferner hinsichtlich des Gewichtes unterscheiden. Die mehreren Innenteile können weiterhin hinsichtlich der Elastizität und/oder der Dämpfung variieren.

Die Erfindung betrifft ferner eine Antriebswelle für ein Kraftfahrzeug sowie ein Kraftfahrzeug mit einem an dem Außenumfang der Antriebswelle klemmend angebrachten Schwingungstilger in einer der zuvor beschriebenen Ausführungsformen und mit den jeweils damit verbundenen, zuvor erwähnten Vorteilen.

Die Erfindung betrifft ferner ein Montageverfahren zur Anbringung des Schwingungstilgers in einer der zuvor beschriebenen Ausführungsformen an einer rotierenden Welle oder Achse, wobei in einem ersten Schritt das Innenteil aus im Wesentlichen nachgiebigen Material an dem Außenumfang der Welle oder Achse angelegt wird, in einem zweiten Schritt das wenigstens zwei Segmente aufweisende und als Trägheitsmasse dienende Außenteil, das Innenteil umgreifend, angebracht wird. Dabei werden im zweiten Schritt die Segmente an ihren beiden Enden in Umfangsrichtung mit einstückig damit ausgebildeten Verbindungselementen wechselseitig verrastet. Dadurch kann die Montage einfach und unter vergleichsweise beengten Montageverhältnissen oder an schlecht zugänglichen Montagestellen durch einfaches Zusammendrücken unter Verrasten erfolgen.

Das Montageverfahren in einer weiteren vorteilhaften Ausgestaltung sieht vor, dass das Außenteil, bevorzugt Innenteil und Außenteil, in einer zur Rotationsachse der Welle oder Achse senkrechten Richtung auf diese aufgebracht werden. Dadurch kann die Montage des Außenteils beziehungsweise sowohl des Außenals auch des Innenteils ohne Demontage der Welle oder Achse erfolgen.

In den beigefügten Figuren sind zwei bevorzugte Ausführungsformen des erfindungsgemäßen Schwingungstilgers dargestellt, ohne die Erfindung darauf zu beschränken, wobei
- Figur 1:: eine perspektivische Darstellung des weitgehend zusammengesetzten Schwingungstilgers in einer ersten Ausführungsform ist;
- Figur 2:: eine perspektivische Darstellung des Außenteils des Schwingungstilgers aus Fig. 1 ist;
- Figur 3:: eine perspektivische Darstellung des Innenteils des Schwingungstilgers aus Fig. 1 ist; und
- Figur 4:: eine perspektivische Darstellung des weitgehend zusammengesetzten Schwingungstilgers in einer zweiten Ausführungsform ist.

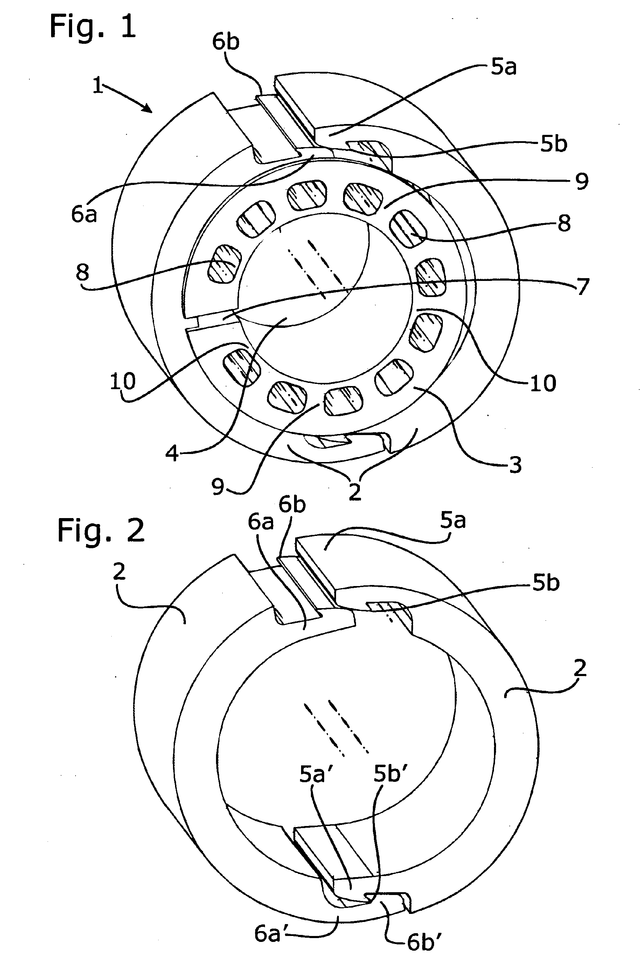

Wie die Fig. 1, 2 und 3 zeigen, umfasst der erfindungsgemäße Schwingungstilger 1 ein aus synthetischem Hochtemperaturkautschuk bestehendes Innenteil 3 und ein aus Stahl bestehendes Außenteil 2. Beide sind im Wesentlichen als ringförmige Rotationskörper ausgebildet. Der durch die Ringform gebildete Durchbruch 4 im Innenteil 3 liegt mit seiner zylindrischen Innenwandung bei der Montage des Schwingungstilgers auf eine Welle oder Achse an deren Außenumfang an. Um eine Demontage der Welle zu umgehen, ist das Innenteil 3 mit einem Schlitz 7 versehen, mittels dem das Innenteil 3 quer zur Längsrichtung der Welle oder Achse auf diese aufgebracht werden kann, ohne die Welle wenigstens an einem Ende von ihrer Einbauumgebung lösen zu müssen.

Das Innenteil 3 weist eine Mehrzahl von in Umfangsrichtung gleichen verteilten offenen Kammern 8 auf, die sich in Axialrichtung vollständig durch das Innenteil 3 hindurch erstrecken. Die Kammern 8 können alternativ auch ein- oder beidseitig geschlossen sein. Zwischen den Kammern 8 liegen komprimierbare Stege 9, die sich im Wesentlichen in Radialrichtung erstrecken und deren Dimensionierung das Dämpfungsverhalten des Schwingungstilgers wesentlich beeinflusst. Innenseitig schließt sich an die Kammern 8 und Stege 9 ein Ring 10 mit im Wesentlichen ebener Innenumfangsfläche an, der für einen guten mechanischen Kontakt zwischen Innenteil 3 und Welle sorgt. Dabei ist das Innenteil 3 bevorzugt einstückig zusammenhängend ausgebildet. In einer alternativen Ausgestaltung ist das Innenteil 3 ohne Ausbildung von Kammern 8 und Stegen 9 ausgeführt.

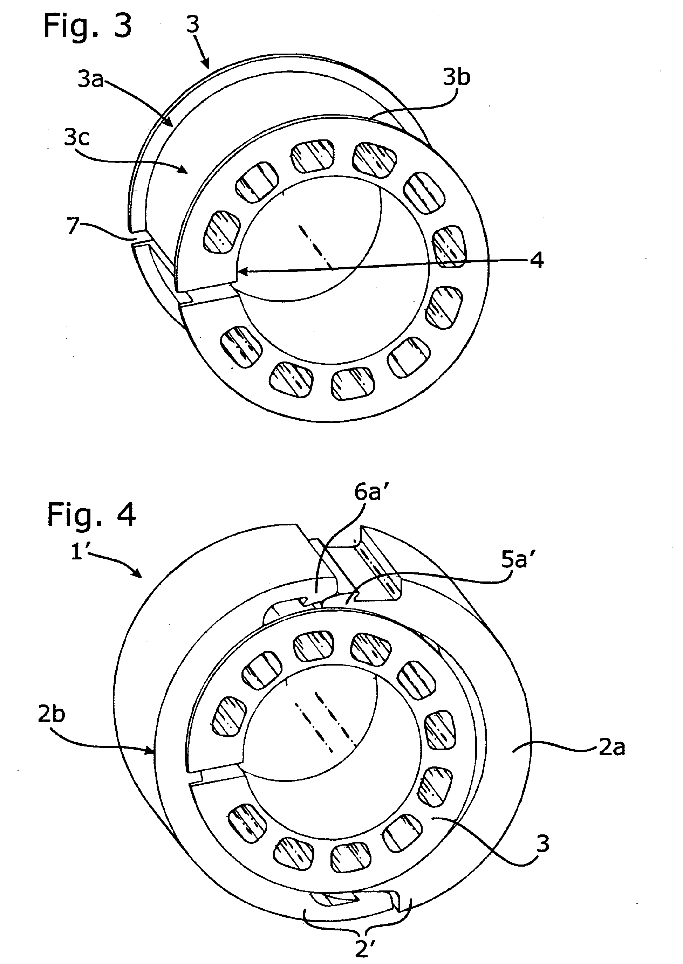

Wie in Fig. 3 im Detail gezeigt ist, weist das Innenteil 3 eine flache Außenwandung 3c auf, an der das Außenteil 2 im montierten Zustand anliegt. Die Mantelfläche 3c ist an ihren beiden, an den Stirnseiten des Innenteils 3 liegenden Begrenzungsrändern mit je einer Auskragung 3a, 3b versehen, um ein Verschieben des Außenteils 2 beziehungsweise dessen Segmente gegenüber dem Innenteil 3 u.a. auch während der Montage zu verhindern. Wie Figur 2 im Detail zeigt, setzt sich das ringförmige Außenteil 2 der ersten Ausführungsform aus zwei identisch ausgebildeten Segmenten 2 zusammen, deren in Umfangsrichtung liegenden Enden durch Rastverbindungen miteinander verbunden sind. Dazu weist jedes Segment 2 einen mit der Außenwandung sich verlängernden Fortsatz 5a, 6a' und einen mit der Innenwandung sich verlängernden Fortsatz 6a, 5a' auf, die im Wesentlichen komplementär zueinander ausgebildet sind. Bei der Montage werden diese in einer zur Umfangsrichtung tangentialen Richtung ineinander geschoben, wobei die in Radialrichtung weisenden Rastnasen 5b, 6b, 5b', 6b' nach Überwinden eines rampenförmigen Abschnitts des Fortsatz unter elastischer Auslenkung des oder der Fortsätze in sich hintergreifender Weise miteinander verrasten. Dadurch werden die Segmente 2 miteinander in Umfangsrichtung fixierend gehalten, wobei die Auskragungen 3a, 3b am Innenteil 3 ein seitliches Verschieben verhindern und damit eine Fixierung der Segmente 2 in Längsrichtung der Welle oder Achse erreicht wird. Der Innendurchmesser des Außenteils 2 ist so bemessen, dass bei Erreichen des verrasteten Zustands der Rastverbindungen, das Innenteil 3 komprimiert wird.

Die in Fig. 4 gezeigte zweite Ausführungsform unterscheidet sich von der in den Fig. 1, 2 und 3 gezeigten, ersten Ausführungsform, dass das Außenteil 2'zwei unterschiedlich ausgebildete Segmente 2a, 2b aufweist. Das Segment 2b weist nämlich an jedem seiner in Umfangsrichtung weisenden Enden einen mit der Außenwandung sich verlängernden Fortsatz 6a' auf, wohingegen das Segment 2a an jedem seiner in Umfangsrichtung weisenden Enden einen mit der Innenwandung sich verlängernden Fortsatz 5a' aufweist.

Grundsätzlich kann bei den erfindungsgemäßen Schwingungstilgern 1, 1' die verbindungsbringende Vorspannung zwischen Schwingungstilger und Welle entweder über die Außenteile 2, 2' und deren Fortsätze 5a, 5b, 6a, 6b alleine bzw. in Kombination mit einem Übermaß zum elastischen Innenteil 3 realisiert werden, wie dies in Fig. 4 dargestellt ist. Die Vorspannung kann aber auch alleine durch das Übermaß zum elastischen Innenteil 3 erzeugt werden, wie in Fig. 1 dargestellt ist.

## Patentansprüche

1. Schwingungstilger (1, 1') zur klemmenden Anbringung auf dem Außenumfang einer rotierenden Welle oder Achse umfassend:
a. ein Innenteil (3) aus im Wesentlichen nachgiebigen Material zum Anliegen an dem Außenumfang der Welle oder Achse,
b. ein wenigstens zwei Segmente (2, 2a, 2b) aufweisendes, das Innenteil umgreifendes und daran schwingend anliegendes und als Trägheitsmasse dienendes Außenteil (2, 2'),
c. die Segmente (2, 2a, 2b) an ihren beiden Enden in Umfangsrichtung mit einstückig damit ausgebildeten Verbindungselementen (5a, 5b, 5a', 5b', 6a, 6b, 6a', 6b') zur Herstellung einer wechselseitigen Rastverbindung ausgebildet sind,
**dadurch gekennzeichnet,**
d. **dass** die jeweiligen Verbindungselemente (5a, 5b, 5a', 5b', 6a, 6b, 6a', 6b') wenigstens zwei komplementär ausgebildete, sich in Umfangsrichtung des Außenumfangs erstreckende Fortsätze (5a, 5a', 6a, 6a') mit sich jeweils wechselseitig hintergreifbaren, in Radialrichtung erstreckenden Rastnasen (5b, 5b', 6b, 6b') umfassen; und
e. **dass** das Innenteil (3) an dessen Stirnseiten mit je einer Auskragung (3a, 3b) zur Fixierung der Segmente (2, 2a, 2b) in Längsrichtung der Welle oder Achse versehen ist.

2. Schwingungstilger (1, 1') gemäß Anspruch 1, **dadurch gekennzeichnet, dass** die Segmente (2, 2a, 2b) im verbundenen Zustand im Wesentlichen einen ringförmigen Rotationskörper ausbilden.

3. Schwingungstilger (1, 1') gemäß einem der vorhergehenden Ansprüche, **dadurch gekennzeichnet, dass** das Innenteil (3) im Wesentlichen Gummi oder Kautschuk, bevorzugt synthetischen Hochtemperaturkautschuk, aufweist.

4. Schwingungstilger (1, 1') gemäß einem der vorhergehenden Ansprüche, **dadurch gekennzeichnet, dass** das Innenteil (3) als geschlitzter Ring ausgebildet ist.

5. Schwingungstilger (1, 1') gemäß einem der vorhergehenden Ansprüche, **dadurch gekennzeichnet, dass** das Außenteil (2, 2') im Wesentlichen als segmentierter Ring ausgebildet ist.

6. Schwingungstilger (1, 1') gemäß einem der vorhergehenden Ansprüche, **dadurch gekennzeichnet, dass** das Außenteil (2, 2') aus einer Eisenlegierung wie Stahl, einem Schwer- oder Buntmetall wie z.B. Messing oder einem Kunststoff mit einer metallischen Einlage z.B. aus einem Schwermetall hergestellt ist.

7. Schwingungstilger (1, 1') gemäß einem der vorhergehenden Ansprüche, **dadurch gekennzeichnet, dass** das Außenteil (2, 2') und das Innenteil (3) derart ausgebildet sind, dass bei der Anbringung auf den Außenumfang der rotierenden Welle oder Achse das nachgiebige Innenteil komprimiert wird.

8. Schwingungstilger (1, 1') gemäß einem der vorhergehenden Ansprüche, **dadurch gekennzeichnet, dass** das Außenteil (2) identisch ausgebildete Segmente (2) umfasst.

9. Montagesatz für wenigstens einen Schwingungstllger (1, 1') gemäß einem der vorhergehenden Ansprüche zur Anbringurig an eine rotierende Welle oder Achse, **gekennzeichnet durch** mehrere Innenteile und/oder Außenteile, die sich wenigstens hinsichtlich des Außendurchmessers und/oder des Innendurchmessers unterscheiden.

10. Antriebswelle für ein Kraftfahrzeug **gekennzeichnet durch** einen an dem Außenumfang der Antriebswelle klemmend angebrachten Schwingungstilger (1, 1') gemäß einem der Ansprüche 1 bis 9.

11. Kraftfahrzeug **gekennzeichnet durch** eine Antriebswelle gemäß dem vorhergehenden Anspruch.

12. Montageverfahren zur Anbringung des Schwingungstilgers gemäß einem der Ansprüche 1 bis 8 an einer rotierenden Welle oder Achse, wobei in einem ersten Schritt das Innenteil aus im Wesentlichen nachgiebigen Material an dem Außenumfang der Welle oder Achse angelegt wird, in einem zweiten Schritt das wenigstens zwei Segmente aufweisende und als Trägheitsmasse dienende Außenteil, das Innenteil umgreifend, angebracht wird, **dadurch gekennzeichnet, dass** im zweiten Schritt die Segmente an ihren beiden Enden in Umfangsrichtung mit einstückig damit ausgebildeten Verbindungselementen wechselseitig verrastet werden.

13. Montageverfahren zur Anbringung des Schwingungstilgers gemäß dem vorhergehenden Anspruch, **dadurch gekennzeichnet, dass** wenigstens das Außenteil, bevorzugt Innenteil und Außenteil, in einer zur Rotationsachse der Welle oder Achse senkrechten Richtung auf diese aufgebracht werden.

## Claims

1. Vibration absorber (1, 1') for clamping attachment to the outer circumference of a rotating shaft or axis, comprising:
a. an inner part (3) of substantially resilient material for abutting against the outer circumference of the shaft or axis,
b. an outer part (2, 2'), which comprises at least two segments (2, 2a, 2b), grips around the inner part and abuts it vibratingly, and which serves as an inertial mass member,
**characterised in that**
c. the segments (2, 2a, 2b) are configured at their two ends in the circumferential direction with connecting members (5a, 5b, 5a', 5b', 6a, 6b, 6a', 6b') formed integrally therewith for establishing a mutual latching connection, and
d. that the respective connecting members (5a, 5b, 5a', 5b', 6a, 6b, 6a', 6b') comprise at least two complementarily configured appendages (5a, 5a', 6a, 6a') extending in the circumferential direction of the outer circumference, with latching lugs (5b, 5b', 6b, 6b') extending in the radial direction that can mutually grip behind one another; and
e. that the inner part (3) is provided at its end faces with one collar-like projection (3a, 3b), respectively, for fixing the segments (2, 2a, 2b) in the longitudinal direction of the shaft or axis.

2. Vibration absorber (1, 1') according to claim 1, **characterised in that** the segments (2, 2a, 2b), in the connected state, substantially form an annular rotation body.

3. Vibration absorber (1, 1') according to any one of the preceding claims, **characterised in that** the inner part (3) substantially comprises synthetic or natural rubber, preferably synthetic high-temperature rubber.

4. Vibration absorber (1, 1') according to any one of the preceding claims, **characterised in that** the inner part (3) is configured as a slotted ring.

5. Vibration absorber (1, 1') according to any one of the preceding claims, **characterised in that** the outer part (2, 2') is substantially configured as a segmented ring.

6. Vibration absorber (1, 1') according to any one of the preceding claims, **characterised in that** the outer part (2, 2') is produced from an iron alloy, such as steel, a heavy or non-ferrous metal, such as brass, or a synthetic material with a metallic insert, e.g. of a heavy metal.

7. Vibration absorber (1, 1') according to any one of the preceding claims, **characterised in that** the outer part (2, 2') and the inner part (3) are configured such that the resilient inner part is compressed during the attachment on the outer circumference of the rotating shaft or axis.

8. Vibration absorber (1, 1') according to any one of the preceding claims, **characterised in that** the outer part (2) comprises identically configured segments (2).

9. Assembly set for at least one vibration absorber (1, 1') according to any one of the preceding claims for attachment to a rotating shaft or axis, **characterised by** a plurality of inner parts and/or outer parts, which differ at least with regard to the outer diameter and/or the inner diameter.

10. Drive shaft for a motor vehicle, **characterised by** a vibration absorber (1, 1') according to any one of the claims 1 to 9, which is clampingly attached to the outer circumference of the drive shaft.

11. Motor vehicle, **characterised by** a drive shaft according to the preceding claim.

12. Assembly method for attaching the vibration absorber according to any one of the claims 1 to 8 to a rotating shaft or axis, wherein, in a first step, the inner part of substantially resilient material is applied to the outer circumference of the shaft or axis, in a second step, the outer part, which comprises at least two segments and serves as an inertial mass member, is applied so as to grip around the inner part, **characterised in that**, in the second step, the segments are mutually latched at their two ends in the circumferential direction with connecting members formed integrally therewith.

13. Assembly method for attaching the vibration absorber according to the preceding claim, **characterised in that** at least the outer part, preferably the inner part and the outer part, are applied, in a direction perpendicular to the axis of rotation of the shaft or axis, onto the latter.

## Revendications

1. Amortisseur de vibrations (1, 1') destiné à être monté à serrage sur la circonférence extérieure d'un arbre ou axe rotatif, comprenant:
a. une partie intérieure (3) en un matériau pour l'essentiel souple pour s'appuyer sur la circonférence extérieure dudit arbre ou axe,
b. une partie extérieure (2, 2') comprenant au moins deux segments (2, 2a, 2b), embrassant ladite partie intérieure et s'appuyant de manière vibrante sur celle-ci et faisant fonction de masse d'inertie,
**caractérisé par le fait que**
c. lesdits segments (2, 2a, 2b) sont réalisés à leurs deux extrémités, dans la direction circonférentielle, avec des éléments de jonction (5a, 5b, 5a', 5b', 6a, 6b, 6a', 6b') formés d'un seul tenant avec ceux-ci, de manière à réaliser un assemblage mutuel à encliquetage, et que
d. les éléments respectifs de jonction (5a, 5b, 5a', 5b', 6a, 6b, 6a', 6b') comprennent au moins deux prolongements (5a, 5a', 6a, 6a') réalisés de manière complémentaire, s'étendant dans la direction circonférentielle de la circonférence extérieure et ayant des nez d'arrêt (5b, 5b', 6b, 6b') aptes à s'engager respectivement d'une manière mutuelle les uns derrière les autres et s'étendant dans la direction radiale, et que
e. ladite partie intérieure (3) est pourvue, sur ses faces frontales, d'une saillie (3a, 3b) respectivement, pour la fixation des segments (2, 2a, 2b) dans la direction longitudinale de l'arbre ou axe.

2. Amortisseur de vibrations (1, 1') selon la revendication 1, **caractérisé par le fait que**, en état assemblé, lesdits segments (2, 2a, 2b) forment pour l'essentiel un corps de révolution annulaire.

3. Amortisseur de vibrations (1, 1') selon l'une quelconque des revendications précédentes, **caractérisé par le fait que** ladite partie intérieure (3) présente pour l'essentiel de la gomme ou du caoutchouc, de préférence du caoutchouc haute température synthétique.

4. Amortisseur de vibrations (1, 1') selon l'une quelconque des revendications précédentes, **caractérisé par le fait que** ladite partie intérieure (3) est réalisée en tant qu'anneau fendu.

5. Amortisseur de vibrations (1, 1') selon l'une quelconque des revendications précédentes, **caractérisé par le fait que** ladite partie extérieure (2, 2') est réalisée pour l'essentiel comme anneau segmenté.

6. Amortisseur de vibrations (1, 1') selon l'une quelconque des revendications précédentes, **caractérisé par le fait que** ladite partie extérieure (2, 2') est réalisée dans un alliage de fer, tel que l'acier, dans un métal lourd ou non ferreux, tel que le laiton, ou dans une matière plastique avec un insert métallique, par exemple en un métal lourd.

7. Amortisseur de vibrations (1, 1') selon l'une quelconque des revendications précédentes, **caractérisé par le fait que** ladite partie extérieure (2, 2') et ladite partie intérieure (3) sont réalisées de manière à ce que, lors du montage sur la circonférence extérieure de l'arbre ou axe rotatif, la partie intérieure souple soit comprimée.

8. Amortisseur de vibrations (1, 1') selon l'une quelconque des revendications précédentes, **caractérisé par le fait que** ladite partie extérieure (2) comprend des segments (2) réalisés de manière identique.

9. Jeu de montage pour au moins un amortisseur de vibrations (1, 1') selon l'une quelconque des revendications précédentes, destiné à être monté sur un arbre ou axe rotatif, **caractérisé par** une pluralité de parties intérieures et/ou parties extérieures qui se distinguent les unes des autres au moins quant au diamètre extérieur et/ou au diamètre intérieur.

10. Arbre moteur pour un véhicule automobile, **caractérisé par** un amortisseur de vibrations (1, 1') selon l'une quelconque des revendications 1 à 8, monté à serrage sur la circonférence extérieure de l'arbre moteur.

11. Véhicule automobile, **caractérisé par** un arbre moteur selon la revendication précédente.

12. Procédé de montage pour monter ledit amortisseur de vibrations selon l'une quelconque des revendications 1 à 8 sur un arbre ou axe rotatif, dans lequel, dans une première étape, ladite partie intérieure en un matériau pour l'essentiel souple est appliquée contre la circonférence extérieure dudit arbre ou axe, dans une deuxième étape, ladite partie extérieure comprenant au moins deux segments et faisant fonction de masse d'inertie est montée en embrassant ladite partie intérieure, **caractérisé par le fait que**, dans ladite deuxième étape, les segments sont encliquetés mutuellement, à leurs deux extrémités, dans la direction circonférentielle, par le biais d'éléments de jonction réalisés d'un seul tenant avec ceux-ci.

13. Procédé de montage pour monter ledit amortisseur de vibrations, selon la revendication précédente, **caractérisé par le fait qu'**au moins ladite partie extérieure, de préférence lesdites parties intérieure et extérieure, sont mises en place sur l'arbre ou l'axe dans une direction perpendiculaire à l'axe de rotation de celui-ci.
